# EUROPEAN PATENT APPLICATION

(11) **EP 3 522 448 A1**
(43) Date of publication of application: **07.08.2019**
(21) Application number: 17854886.3
(22) Date of filing: 27.09.2017
(51) Int. Cl.: H04L 12/24

(54) **ERROR CODE DETECTION METHOD, DEVICE AND SYSTEM AND COMPUTER-READABLE STORAGE MEDIUM**

(30) Priority: 29.09.2016 CN 201610868127
(71) Applicant: ZTE Corporation, Shenzhen, Guangdong 518057 (CN)
(72) Inventor: LIU, Feng, Shenzhen Guangdong 518057 (CN)
(74) Representative: White, Andrew John
(86) International application number: PCT/CN2017/103658
(87) International publication number: WO 2018/059436

(57) **Abstract**

Embodiments of the present invention disclose a code error detection method, device and system, and a computer-readable storage medium, which are applied to a transmitting end in a flexible Ethernet (FlexE) network structure. The method comprises: checking, by the transmitting end, an information block to be transmitted within the coverage of a current overhead frame according to a pre-set checking strategy to acquire a checking reference value corresponding to the information block to be transmitted; saving, by the transmitting end, the checking reference value corresponding to the information block to be transmitted within the coverage of the current overhead frame to a pre-set code error detection field in the next overhead frame; and transmitting, by the transmitting end, the checking reference value corresponding to the information block to be transmitted within the coverage of the current overhead frame along with the next overhead frame.

## Description

### Cross Reference to Related Applications

This application is submitted based on a Chinese patent application with the application number 201610868127.4, filed on September 29, 2016, and claims the priority of the Chinese patent application, the entirety of which is incorporated herein by way of reference.

### Technical Field

The present invention relates to network communication technologies, and in particular, to a code error detection method, device and system, and a computer-readable storage medium.

### Background Art

The rapid development of network technologies and the rapid increase of network information traffic have prompted the corresponding rapid development of the transmission bandwidth of communication networks. The interface bandwidth speed of a communication device has been increased from 10M (in bits/second) to 100M, and then increased to 1G and 10G. Currently, the interface bandwidth speed of 100G has been reached, and commercial 100G optical modules have become widely used on the market.

At present, 400G optical modules have been developed, but the 400G optical modules are expensive, exceeding the price of four 100G optical modules, resulting in the lack of commercial economic value of the 400G optical modules. Therefore, in order to deliver 400G services on the 100G optical modules, the International Standards Organization defines the Flexible Ethernet (FlexE) protocol.

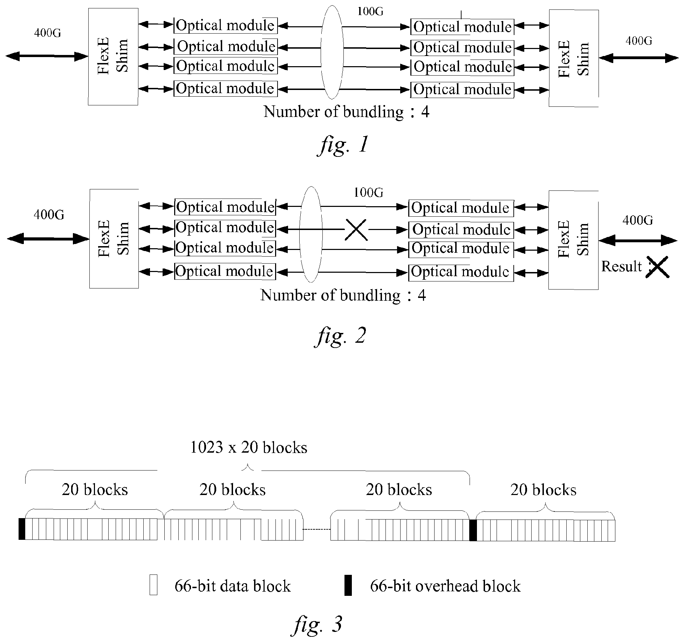

The basic content of the FlexE protocol is to bundle multiple 100G transmission channels to form a transmission channel with a greater bandwidth speed, as shown in Fig. 1, a layer (FlexE shim) is added between an MAC layer and a Physical Coding Sublayer (PCS) by means of the FlexE protocol, and four 100G physical channels are bundled by the FlexE shim to form a 400G logical channel, thereby solving the requirements of delivery of 400G services without increasing the cost.

Since the FlexE protocol bundles multiple physical channels into one logical channel for service delivery, when one of the physical channels fails, the entire logical channel fails; for example, the interruption of one of the physical channels causes the entire logical channel to be interrupted, as shown in Fig. 2, this will reduce the reliability of the entire logical channel. Generally, the probability of failure of the logical channel is an integer multiple of the probability of failure of a single physical channel, and the multiple is exactly the number of the physical channels bundled to form the logical channel.

In the current FlexE protocol, there is no physical channel monitoring function, and it is impossible to monitor the signal delivery quality of each physical channel, and it is impossible to alarm when a certain physical channel fails, thereby affecting the reliability and application value of the FlexE protocol.

### Summary of the Invention

In order to solve the above technical problems, it is desirable for embodiments of the present invention to provide a code error detection method, device and system, and a computer-readable storage medium.

In a first aspect, an embodiment of the present invention provides a code error detection method applied to a transmitting end in a FlexE network structure, the method comprising:
checking, by the transmitting end, an information block to be transmitted within the coverage of a current overhead frame according to a pre-set checking strategy to acquire a checking reference value corresponding to the information block to be transmitted;
saving, by the transmitting end, the checking reference value corresponding to the information block to be transmitted within the coverage of the current overhead frame to a pre-set code error detection field in the next overhead frame; and
transmitting, by the transmitting end, the checking reference value corresponding to the information block to be transmitted within the coverage of the current overhead frame along with the next overhead frame,
wherein the checking reference value corresponding to the information block to be transmitted within the coverage of the current overhead frame is used by a receiving end to detect whether a code error occurs during data transfer by the transmitting end.

In the above solution, before checking, by the transmitting end, according to a pre-set checking strategy, an information block to be transmitted within the coverage of a current overhead frame to acquire a checking reference value corresponding to the information block to be transmitted, the method further comprises:
setting, by the transmitting end, the code error detection field in reserved fields in the overhead frame according to a pre-set setting strategy, wherein the number of the code error detection field is at least one.

In the above solution, checking, by the transmitting end, an information block to be transmitted within the coverage of a current overhead frame according to a pre-set checking strategy to acquire a checking reference value corresponding to the information block to be transmitted, comprises:
determining, by the transmitting end, a checking start end in the information block to be transmitted, and determining a checking interval within the coverage of the current overhead frame;
acquiring, by the transmitting end, sub-intervals to be checked starting from the checking start end within the checking interval according to a pre-set data length; and
operating, by the transmitting end, on data within the sub-intervals to be checked according to a pre-set operation strategy sequentially to acquire the checking reference value corresponding to the information block to be transmitted.

In a second aspect, an embodiment of the present invention provides a code error detection method applied to a receiving end in a FlexE network structure, the method comprising:
when receiving an information block within the coverage of a current overhead frame, checking, by the receiving end, according to a pre-set checking strategy to acquire a checking result corresponding to the information block within the coverage of the current overhead frame;
acquiring, by the receiving end, a checking reference value from a pre-set code error detection field in the next overhead frame received; and
comparing, by the receiving end, the checking result with the checking reference value; and determining, by the receiving end, that there is no code error in the information block within the coverage of the received current overhead frame if the checking result is the same as the checking reference value; or determining, by the receiving end, that a code error occurs in the information block within the coverage of the received current overhead frame if the checking result is different from the checking reference value.

In the above solution, when receiving an information block within the coverage of a current overhead frame, checking, by the receiving end, according to a pre-set checking strategy to acquire a checking result corresponding to the information block within the coverage of the current overhead frame, comprises;
determining, by the receiving end, a checking start end in the received information block within the coverage of the current overhead frame, and determining a checking interval within the coverage of the current overhead frame;
acquiring, by the receiving end, sub-intervals to be checked starting from the checking start end within the checking interval according to a pre-set data length; and
operating, by the receiving end, on data within the sub-intervals to be checked according to a pre-set operation strategy sequentially to acquire the checking result corresponding to the received information block.

In a third aspect, an embodiment of the present invention provides a code error checking method applied to a transmitting end and a receiving end in a FlexE network structure, the method comprising:
checking, by the transmitting end, an information block to be transmitted within the coverage of a current overhead frame according to a pre-set checking strategy to acquire a checking reference value corresponding to the information block to be transmitted;
saving, by the transmitting end, the checking reference value corresponding to the information block to be transmitted within the coverage of the current overhead frame to a pre-set code error detection field in the next overhead frame; and
transmitting, by the transmitting end, the checking reference value corresponding to the information block to be transmitted within the coverage of the current overhead frame along with the next overhead frame to the receiving end;
when receiving the information block within the coverage of the current overhead frame, checking, by the receiving end, according to a pre-set checking strategy to acquire a checking result corresponding to the information block within the coverage of the current overhead frame;
acquiring, by the receiving end, the checking reference value from the pre-set code error detection field in the next overhead frame received; and
comparing, by the receiving end, the checking result with the checking reference value; and determining, by the receiving end, that there is no code error in the information block within the coverage of the received current overhead frame if the checking result is the same as the checking reference value; or determining, by the receiving end, that a code error occurs in the information block within the coverage of the received current overhead frame if the checking result is different from the checking reference value.

In a fourth aspect, an embodiment of the present invention provides a transmitting-end device, comprising: a first checking module, a saving module, and a transmitting module, wherein
the first checking module is configured to check an information block to be transmitted within the coverage of a current overhead frame according to a pre-set checking strategy to acquire a checking reference value corresponding to the information block to be transmitted;
the saving module is configured to save the checking reference value corresponding to the information block to be transmitted within the coverage of the current overhead frame to a pre-set code error detection field in the next overhead frame; and
the transmitting module is configured to transmit the checking reference value corresponding to the information block to be transmitted within the coverage of the current overhead frame along with the next overhead frame,
wherein the transmitted checking reference value corresponding to the information block to be transmitted within the coverage of the current overhead frame is used by a receiving end to detect whether a code error occurs during data transfer by the transmitting end.

In the above solution, the transmitting-end device further comprises: a setting module configured to set the code error detection field in reserved fields in the overhead frame according to a pre-set setting strategy, wherein the number of the code error detection field is at least one.

In the above solution, the first checking module is configured to:
determine a checking start end in the information block to be transmitted, and determine a checking interval within the coverage of the current overhead frame;
acquire sub-intervals to be checked starting from the checking start end within the checking interval according to a pre-set data length; and
operate on data within the sub-intervals to be checked according to a pre-set operation strategy sequentially to acquire the checking reference value corresponding to the information block to be transmitted.

In a fifth aspect, an embodiment of the present invention provides a receiving-end device, comprising: a receiving module, a second checking module, an acquiring module, and a determining module, wherein
the receiving module is configured to receive an information block within the coverage of a current overhead frame;
the second checking module is configured to, when the receiving module receives the information block within the coverage of the current overhead frame, check according to a pre-set checking strategy to acquire a checking result corresponding to the information block within the coverage of the current overhead frame;
the receiving module is further configured to receive the next overhead frame;
the acquiring module is configured to acquire a checking reference value from a pre-set code error detection field in the next overhead frame received by the receiving module; and
the determining module is configured to compare the checking result with the checking reference value; and determine that there is no code error in the information block within the coverage of the received current overhead frame if the checking result is the same as the checking reference value; or determine that a code error occurs in the information block within the coverage of the received current overhead frame if the checking result is different from the checking reference value.

In the above solution, the second checking module is configured to:
determine a checking start end in the received information block within the coverage of the current overhead frame, and determine a checking interval within the coverage of the current overhead frame;
acquire sub-intervals to be checked starting from the checking start end within the checking interval according to a pre-set data length; and
operate on data within the sub-intervals to be checked according to a pre-set operation strategy sequentially to acquire the checking result corresponding to the received information block.

In a sixth aspect, an embodiment of the present invention provides a code error checking system, the system comprising a transmitting end and a receiving end in a FlexE network structure, wherein
the transmitting end is configured to: check an information block to be transmitted within the coverage of a current overhead frame according to a pre-set code error checking strategy to acquire a checking reference value corresponding to the information block to be transmitted;
save the checking reference value corresponding to the information block to be transmitted within the coverage of the current overhead frame to a pre-set code error detection field in the next overhead frame; and
transmit the checking reference value corresponding to the information block to be transmitted within the coverage of the current overhead frame along with the next overhead frame to the receiving end; and
the receiving end is configured to: when receiving an information block within the coverage of the current overhead frame, check according to a pre-set code error checking strategy to acquire a checking result corresponding to the information block within the coverage of the current overhead frame;
acquire a checking result from the pre-set code error detection field in the next overhead frame received; and
compare the checking result with the checking reference value; and determine that there is no code error in the information block within the coverage of the received current overhead frame if the checking result is the same as the checking reference value; or determine that a code error occurs in the information block within the coverage of the received current overhead frame if the checking result is different from the checking reference value.

In a seventh aspect, an embodiment of the present invention provides a computer-readable storage medium having stored thereon a computer program that is executed by a processor to implement the steps of any one of the above methods for the transmitting end, or the steps of any one of the above methods for the receiving end.

The embodiments of the present invention provide a code error detection method, device and system, and a computer-readable storage medium. The checking reference value of data to be transferred is transferred by the transmitting end to the receiving end, so that the receiving end can check the received data according to the checking reference value transferred by the transmitting end, and can perform code error detection on the physical channel in the FlexE protocol, thereby improving the reliability and application value of the FlexE protocol.

### Brief Description of the Drawings

Fig. 1 is a schematic diagram of a FlexE network structure provided in the related art;
Fig. 2 is a schematic diagram of a failure of a physical channel provided in the related art;
Fig. 3 is a schematic diagram of the coverage of an overhead block provided in an embodiment of the present invention;
Fig. 4 is a schematic diagram of data transfer of a FlexE network structure provided in an embodiment of the present invention;
Fig. 5 is a schematic flowchart of a code error detection method provided in an embodiment of the present invention;
Fig. 6 is a schematic structural diagram of an overhead frame provided in an embodiment of the present invention;
Fig. 7 is a schematic diagram of the coverage of an overhead frame provided in an embodiment of the present invention;
Fig. 8 is a schematic structural diagram of a further overhead frame provided in an embodiment of the present invention;
Fig. 9 is a schematic diagram of a process for implementing a code error detection provided in an embodiment of the present invention;
Fig. 10 is a schematic diagram of a further process for implementing a code error detection provided in an embodiment of the present invention;
Fig. 11 is a schematic flowchart of a further code error detection method provided in an embodiment of the present invention;
Fig. 12 is a schematic flowchart of a still further code error detection method provided in an embodiment of the present invention;
Fig. 13 is a schematic structural diagram of a transmitting-end device provided in an embodiment of the present invention;
Fig. 14 is a schematic structural diagram of a further transmitting-end device provided in an embodiment of the present invention;
Fig. 15 is a schematic structural diagram of a receiving-end device provided in an embodiment of the present invention; and
Fig. 16 is a schematic structural diagram of a code error detection system provided in an embodiment of the present invention.

### Detailed Description of Embodiments

The technical solutions in the embodiments of the present invention will be clearly and completely described below in conjunction with the drawings in the embodiments of the present invention.

In an optical module, 100G data messages are 64/66 encoded before being transmitted, that is, 64-bit data is expanded into 66-bit data blocks, the added 2-bit data being located at the front of the 66-bit data block and serving as a start flag of the 66-bit data block; and is then transmitted from an optical port in the form of the 66-bit data blocks. Upon reception, an optical port discriminates the 66-bit data blocks from the received data stream, then recovers the original 64-bit data from the 66-bit data blocks, and reassembles same to obtain the data message.

The FlexE protocol is in a block conversion layer from 64-bit data block to 66-bit data block. Before transmitting the 66-bit data blocks, a transmitting end sorts and plans the 66-bit data blocks. As shown in Fig. 3, the white block represents a 66-bit data block. For a 100G service, every twenty 66-bit data blocks are grouped into one data block group, the twenty 66-bit data blocks included in each data block group represent twenty time slots, and each time slot represents the service speed of the 5G bandwidth. When the transmitting end transmits the 66-bit data blocks, a FlexE overhead block, as shown by the black block in Fig. 3, is inserted every time 1023 data block groups, i.e. 1023 × 20 data blocks, are transmitted. After the FlexE overhead block is inserted, the transmitting end will continue to transmit the data blocks. When the second 1023 × 20 data blocks are transmitted, a FlexE overhead block is inserted again, the data length of which is also 66 bits, and so on. In this way, during the process of transmitting the data blocks, FlexE overhead blocks are periodically inserted, and the interval between two adjacent FlexE overhead blocks is 1023 × 20 data blocks.

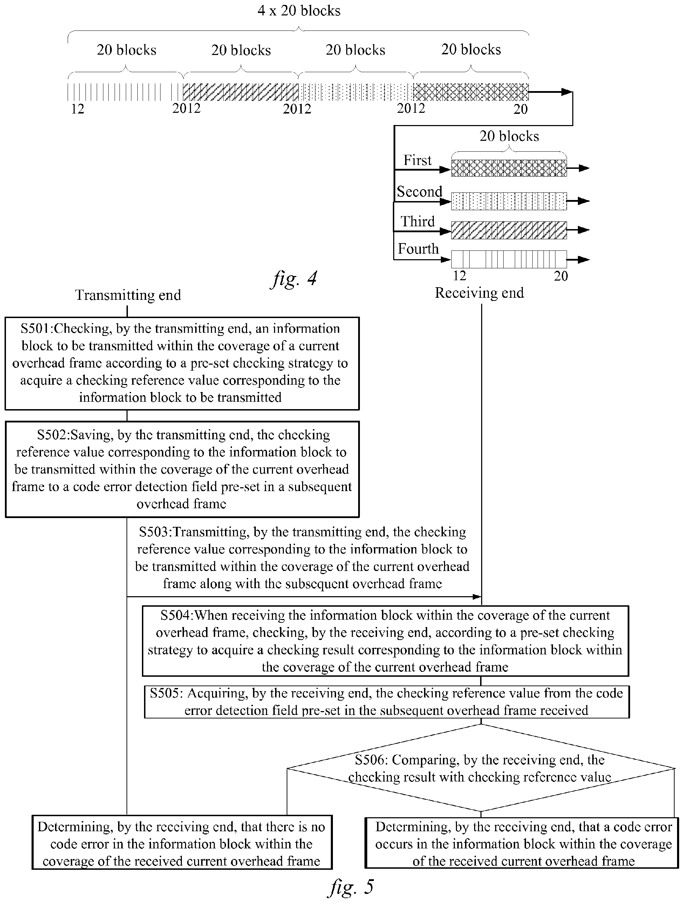

When multiple physical channels with a low bandwidth speed are bundled into a logical channel with a high bandwidth speed by using the FlexE protocol, the transmitting end transmits all the data block groups to the multiple physical channels with the low bandwidth speed on average and in a polling manner, so that the data blocks on all the physical channels are fully aligned at the time of transmission, and the overhead blocks are simultaneously inserted on all the physical channels at intervals of 1023 data block groups, thereby ensuring that the data blocks and the overhead blocks on the physical channels are fully aligned. Taking the FlexE network structure shown in Fig. 1 as an example, when four 100G physical channels are bundled into one 400G logical channel, as shown in Fig. 4, the first data block group, i.e. the first twenty data blocks, is transmitted to the first physical channel; the second data block group, i.e. the second twenty data blocks, is transmitted to the second physical channel; the third data block group, i.e. the third twenty data blocks, is transmitted to the third physical channel; the fourth data block group, i.e. the fourth twenty data blocks, is transmitted to the fourth physical channel; then the fifth data block group, i.e. the fifth twenty data blocks, is transmitted to the first physical channel, and so on. In the way of calculating the remainder by 4, all the data block groups are transmitted to the four physical channels on average and in a polling manner.

At a receiving end, each of the physical channels separately receives a data block and then determines the location of the overhead block. Each physical channel realigns the data block groups of the four physical channels using the location of the overhead block as a reference. The data block groups of the four physical channels are aligned using the location of the overhead block as a reference, and are reordered according to the inverse process of the polling allocation at the time of transmission: a first data block group after the overhead block is obtained from the first physical channel and is ordered in the front, a first data block group after the overhead block is obtained from the second physical channel and is ordered thereafter, a first data block group after the overhead block is obtained from the third physical channel and is ordered still thereafter, and a first data block group after the overhead block is obtained from the fourth physical channel and is ordered at the end; and then the above process is re-executed, a second data block group after the overhead block is obtained from the first physical channel and is ordered thereafter, a second data block group after the overhead block is obtained from the second physical channel and is ordered still thereafter, and so on, so that the data block groups of the four physical channels are reordered into a data block group of a large logical channel.

In this way, the four physical channels can be bundled to form a large logical channel. In terms of the service, the user can only perceive one large logical channel and deliver the service through the large logical channel without knowledge of the underlying four physical channels.

Based on the above example of the FlexE network structure and the data transfer manner, the following embodiments of the present invention are proposed.

Referring to Fig. 5, which shows a code error detection method provided in an embodiment of the present invention, the method may be applied to a transmitting end and a receiving end in a FlexE network structure, and the method may comprise:
S501: checking, by the transmitting end, an information block to be transmitted within the coverage of a current overhead frame according to a pre-set checking strategy to acquire a checking reference value corresponding to the information block to be transmitted;
S502: saving, by the transmitting end, the checking reference value corresponding to the information block to be transmitted within the coverage of the current overhead frame to a pre-set code error detection field in the next overhead frame; and
S503: transmitting, by the transmitting end, the checking reference value corresponding to the information block to be transmitted within the coverage of the current overhead frame along with the next overhead frame.
S504: when receiving the information block within the coverage of the current overhead frame, checking, by the receiving end, according to a pre-set checking strategy to acquire a checking result corresponding to the information block within the coverage of the current overhead frame;
S505: acquiring, by the receiving end, the checking reference value from the pre-set code error detection field in the next overhead frame received; and
S506: comparing, by the receiving end, the checking result with checking reference value; and determining, by the receiving end, that there is no code error in the information block within the coverage of the received current overhead frame if the checking result is the same as the checking reference value; or determining, by the receiving end, that a code error occurs in the information block within the coverage of the received current overhead frame if the checking result is different from the checking reference value.

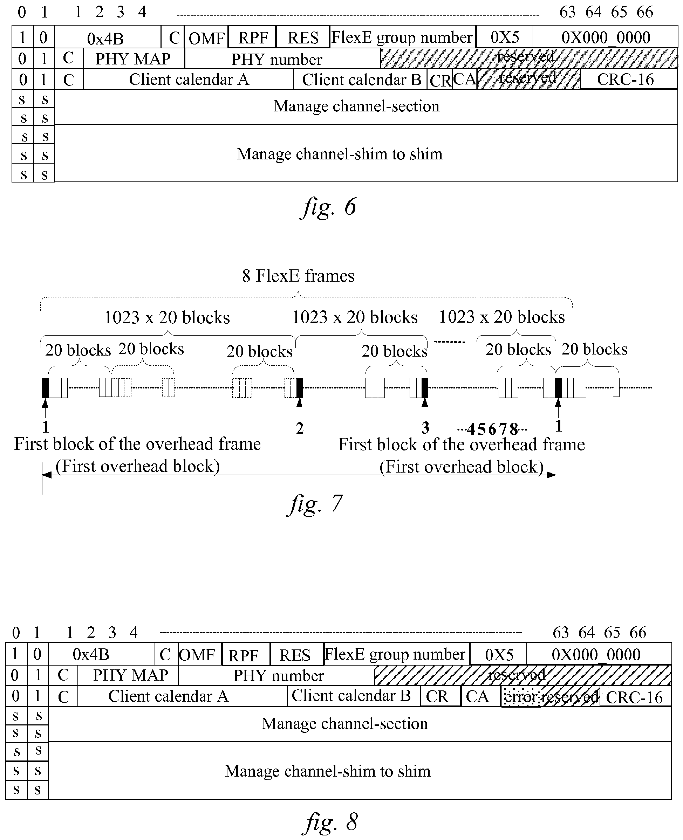

In the technical solution shown in Fig. 5, for the overhead frame, it should be noted that the data length of a FlexE overhead block is also 66 bits, and when a data stream is transmitted, since one overhead block is inserted every 1023 × 20 data blocks, the overhead block plays a locating function in the entire data stream, that is, if the overhead block is found, the location of the first data block group and thus the locations of subsequent data block groups in the service data stream can be known. The contents of the current FlexE overhead block are shown in Fig. 6. In the FlexE protocol, eight consecutive overhead blocks form an overhead frame. Therefore, as shown in Fig. 7, the coverage of one overhead frame is 8 × 1023 × 20 data blocks (indicated by white blocks) and eight overhead blocks (represented by black blocks). In this embodiment, the data blocks and the overhead blocks are collectively referred to as information blocks. Therefore, the coverage of one overhead frame is 8 × (1023 × 20 + 1) information blocks.

An overhead block consists of a 2-bit block flag and 64-bit block contents. The block flag is located in the first 2 columns, the next 64 columns are the block contents, the block flag of the first overhead block is 10, and the block flags of the following 7 overhead blocks are 01 or SS (SS indicates that the contents are undetermined). The contents of the first overhead block are: 0x4B (8 bits, 4B in hexadecimal), C bit (1 bit, indicating adjustment control), OMF bit (1 bit, denoting an overhead frame multiframe indication), RPF bit (1 bit, denoting a remote defect indication), RES bit (1 bit, a reserved bit), FlexE group number (20 bits, denoting the serial number of a bundle group), 0x5 (4 bits, 5 in hexadecimal), and 000000 (28 bits, all being 0). 0x4B and 0x5 are the flag indications of the first overhead block, and during reception, when it is found that the corresponding locations in an overhead block are 0x4B and 0x5, it indicates that the overhead block is the first overhead block in the overhead frame, and the overhead block forms one overhead frame with the following seven consecutive overhead blocks. In the overhead frame, the reserved parts are reserved fields, which have not yet been defined, as shown by the hatched block in Fig. 6. The contents of the other bytes in the overhead block are not related to the technical solution of the embodiment of the present invention, and therefore will not be specifically described.

With the technical solution shown in Fig. 5, the transmitting end transmits the checking information about the data to be transmitted, to the receiving end, so that the receiving end can check the received data according to the checking information transmitted by the transmitting end, and can perform code error detection on the physical channels in the FlexE protocol, thereby improving the reliability and application value of the FlexE protocol.

With regard to the technical solution shown in Fig. 5, as an example, before step S501, the method may further comprise:
setting, by the transmitting end, the code error detection field in reserved fields in the overhead frame according to a pre-set setting strategy, wherein the number of the code error detection field is at least one.

Specifically, the pre-set setting strategy may be negotiated and determined in advance by the receiving end and the transmitting end, or may be set by an upper-layer system, which will not be described in this embodiment. Both the receiving end and the transmitting end know the locations of the code error detection field in the reserved fields in the overhead frame, so that the transmitting end can save the checking reference value in the code error detection field, and accordingly, the receiving end can acquire the checking reference value from the code error detection field. After the setting of the code error detection field in the reserved fields is completed, the structure of the overhead frame is as shown in Fig. 8, in which the dot-filled block denotes the code error detection field, error.

With regard to the technical solution shown in Fig. 5, the checking strategy according to which the receiving end checks is the same as the checking strategy according to which the transmitting end checks, and may also be negotiated and determined in advance by the receiving end and the transmitting end, or may be set by an upper-layer system, which will not be described in this embodiment.

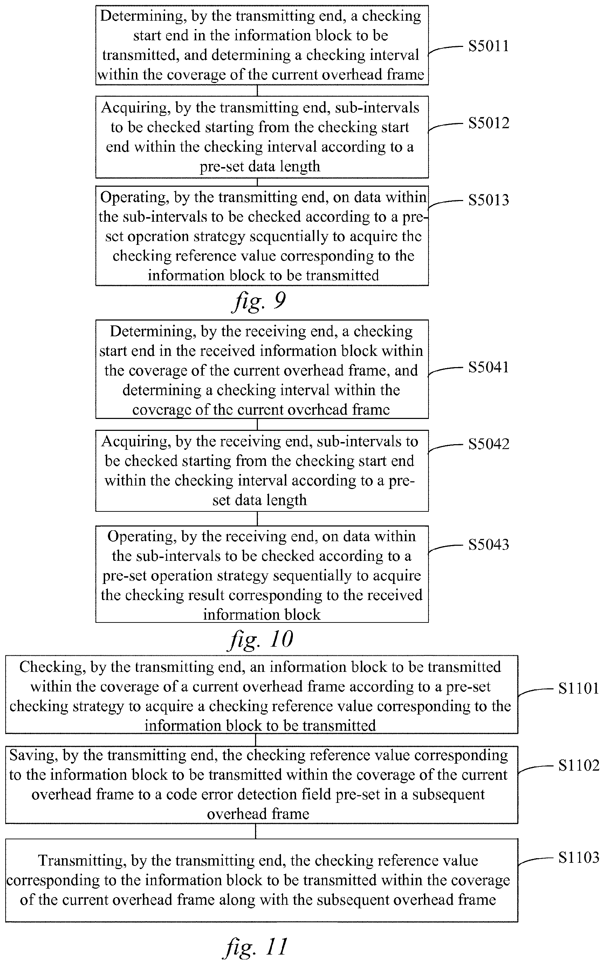

As an example, for the transmitting end, referring to Fig. 9, in step S501, checking, by the transmitting end, an information block to be transmitted within the coverage of a current overhead frame according to a pre-set checking strategy to acquire a checking reference value corresponding to the information block to be transmitted, comprises:
S5011: determining, by the transmitting end, a checking start end in the information block to be transmitted, and determining a checking interval within the coverage of the current overhead frame;
S5012: acquiring, by the transmitting end, sub-intervals to be checked starting from the checking start end within the checking interval according to a pre-set data length; and
S5013: operating, by the transmitting end, on data within the sub-intervals to be checked according to a pre-set operation strategy sequentially to acquire the checking reference value corresponding to the information block to be transmitted.

With regard to the process shown in Fig. 9, the description is given in this embodiment by means of the following specific example:
in the information block to be transmitted within the coverage of the current overhead frame, starting from the first overhead block, the transmitting end takes 11 bits of data from the block, and then continues to take 11 bits of data from the block, and performs an XOR operation on the first 11 bits of data and the later 11 bits of data bit by bit, of which the operation result also has 11 bits;
thereafter, the transmitting end takes the subsequent 11 bits of data from the overhead block, and performs an XOR operation on same and the previous operation result to obtain a new operation result; and by analogy, the transmitting end continues to take the subsequent 11 bits of data from the block, and performs an XOR operation on same and the previous operation result to obtain a new operation result, until all the bits in the first overhead block are subjected to the operation. Since one overhead block or data block has a length of 66 bits, each time 11 bits of data are taken for operation, then six operations are required to complete the operations for one information block.

After the operations on the data of the first overhead block are completed, operations are performed on the operation result of the first overhead block and the data in the next data block in the same manner until the operations on the next data block are also completed, and then the process proceeds to the third data block, ...; after all the 1023 × 20 data blocks have been involved in the operations, the process continues to perform operations on the second overhead block in the same way, and then performs the operations on the next 1023 × 20 data block, ..., and so on, until the operations on all the data of the 8 × (1023 × 20 + 1) information blocks are completed, so that the 11-bit operation result is obtained, which is the checking reference value corresponding to the information block to be transmitted within the coverage of the current overhead frame as described in Fig. 7.

In the foregoing specific example, it can be understood that the checking start end is the start bit of the first overhead block within the coverage of the current overhead frame; the checking interval is the entire range covered by the current overhead frame, i.e. 8 × (1023 × 20 + 1) information blocks; the pre-set operation strategy is the XOR operation; and the pre-set data length is 11 bits, and therefore, the sub-intervals to be checked are data intervals divided every 11 bits within the entire range covered by the current overhead frame and starting with the start bit of the first overhead block within the coverage of the current overhead frame.

It should be noted that the foregoing specific example is only used to illustrate the process shown in Fig. 9, and may be implemented in various flexible manners in specific implementations. As an example, the pre-set length of data involved in the operation every time may be any bit of data, for example, if the pre-set data length is 6 bits, a total of 11 operations are required per 66-bit block. As another example, the pre-set operation strategy may be other algorithms, such as an XNOR algorithm, and various CRC algorithms. As still another example, the checking interval may not comprise the first 2 bits of data in each information block, and only comprises the following 64 bits of data in each information block; or the checking interval may comprise no overhead block, and only comprises the data block or part of the data block; or the checking interval only comprises several data blocks within the coverage of the current overhead frame, for example, only comprises the third data block in the data block group, and does not comprise the other data blocks. As yet still another example, the number of the checking reference values may be one or more, such as twenty items of error information, from error1 to error20, wherein errror1 only checks the code error state of the first data block in the data block group, and errror2 only checks the code error state of the second data block in the data block group, and so on. This will not be described in detail in this embodiment, but the above disclosed implementations are also included in the scope of protection of present application.

Correspondingly, for the receiving end, since the checking strategy according to which the receiving end checks is the same as the checking strategy according to which the transmitting end checks, referring to Fig. 10, for Step S504, when receiving an information block within the coverage of a current overhead frame, checking, by the receiving end, according to a pre-set checking strategy to acquire a checking result corresponding to the information block within the coverage of the current overhead frame, may specifically comprise:
S5041: determining, by the receiving end, a checking start end in the received information block within the coverage of the current overhead frame, and determining a checking interval within the coverage of the current overhead frame;
S5042: acquiring, by the receiving end, sub-intervals to be checked starting from the checking start end within the checking interval according to a pre-set data length; and
S5043: operating, by the receiving end, on data within the sub-intervals to be checked according to a pre-set operation strategy sequentially to acquire the checking result corresponding to the received information block.

It can be understood that, since the checking strategy according to which the receiving end checks is the same as the checking strategy according to which the transmitting end checks, the solution shown in Fig. 10 is the same as the solution shown in Fig. 9 in the implementation process. That is to say, the checking start end, the checking interval, the pre-set data length, and the pre-set operation strategy used by the receiving end in the process of checking according to the technical solution shown in Fig. 10 are consistent with those used by the transmitting end in the process of checking according to the technical solution shown in Fig. 9.

With regard to the process described in Fig. 10, a specific example is as follows: taking the first overhead block of the overhead frame as a start position, taking 11 bits of data from the block, and taking the next 11 bits of data from the block, and performing an XOR operation on the first 11 bits of data and the later 11 bits of data bit by bit, of which the operation result also has 11 bits;
thereafter, taking the subsequent 11 bits of data from the overhead block, and performing an XOR operation on same and the previous operation result to obtain a new operation result, and performing the XOR operation on same and the subsequent bits; ..., and so on, until the operations on the 8 × (1023 × 20 + 1) information blocks, i.e. all the 66-bit blocks within the coverage of an overhead frame are completed. The operation result is retained, which is the checking result.

It should be noted that, since the transmitting end saves the checking reference value corresponding to the information block to be transmitted within the coverage of the current overhead frame in the next overhead frame, the receiving end checks the received information block within the coverage of the current overhead frame and then can compare the checking result corresponding to the received information block within the coverage of the current overhead frame with the checking reference value saved in the next overhead frame, and depending on whether the two are the same, determine whether a code error occurs during the data transfer process.

This embodiment provides a checking method applied to a transmitting end and a receiving end in a FlexE network structure, wherein the transmitting end transmits the checking information of the data to be transmitted to the receiving end, so that the receiving end can check the received data according to the checking information transmitted by the transmitting end, and can check the physical channels in the FlexE protocol, thereby improving the reliability and application value of the FlexE protocol.

Based on the same technical concept as that of the foregoing embodiment, referring to Fig. 11, which shows a further code error detection method provided in an embodiment of the present invention, the method is applied to a transmitting end in a FlexE network structure, and the method may comprise:
S1101: checking, by the transmitting end, an information block to be transmitted within the coverage of a current overhead frame according to a pre-set checking strategy to acquire a checking reference value corresponding to the information block to be transmitted;
S1102: saving, by the transmitting end, the checking reference value corresponding to the information block to be transmitted within the coverage of the current overhead frame to a pre-set code error detection field in the next overhead frame; and
S1103: transmitting, by the transmitting end, the checking reference value corresponding to the information block to be transmitted within the coverage of the current overhead frame along with the next overhead frame.
wherein the checking reference value corresponding to the information block to be transmitted within the coverage of the current overhead frame is used by a receiving end to detect whether a code error occurs during data transfer by the transmitting end.

As an example, before step S1101, the method may further comprise:
setting, by the transmitting end, the code error detection field in reserved fields in the overhead frame according to a pre-set setting strategy, wherein the number of the code error detection field is at least one.

Specifically, the pre-set setting strategy may be negotiated and determined in advance by the receiving end and the transmitting end, or may be set by an upper-layer system, which will not be described in this embodiment. Both the receiving end and the transmitting end know the locations of the code error detection field in the reserved fields in the overhead frame, so that the transmitting end can save the checking reference value in the code error detection field, and accordingly, the receiving end can acquire the checking reference value from the code error detection field. After the setting of the code error detection field in the reserved fields is completed, the structure of the overhead frame is as shown in Fig. 7, in which the dot-filled block denotes the code error detection field, error.

As an example, for the transmitting end, in step S1101, checking, by the transmitting end, an information block to be transmitted within the coverage of a current overhead frame according to a pre-set checking strategy to acquire a checking reference value corresponding to the information block to be transmitted, comprises:
determining, by the transmitting end, a checking start end in the information block to be transmitted, and determining a checking interval within the coverage of the current overhead frame;
acquiring, by the transmitting end, sub-intervals to be checked starting from the checking start end within the checking interval according to a pre-set data length; and
operating, by the transmitting end, on data within the sub-intervals to be checked according to a pre-set operation strategy sequentially to acquire the checking reference value corresponding to the information block to be transmitted.

It should be noted that, since the transmitting end saves the checking reference value corresponding to the information block to be transmitted within the coverage of the current overhead frame in the next overhead frame, the receiving end checks the received information block within the coverage of the current overhead frame and then can compare the checking result corresponding to the received information block within the coverage of the current overhead frame with the checking reference value saved in the next overhead frame, and depending on whether the two are the same, determine whether a code error occurs during the data transfer process.

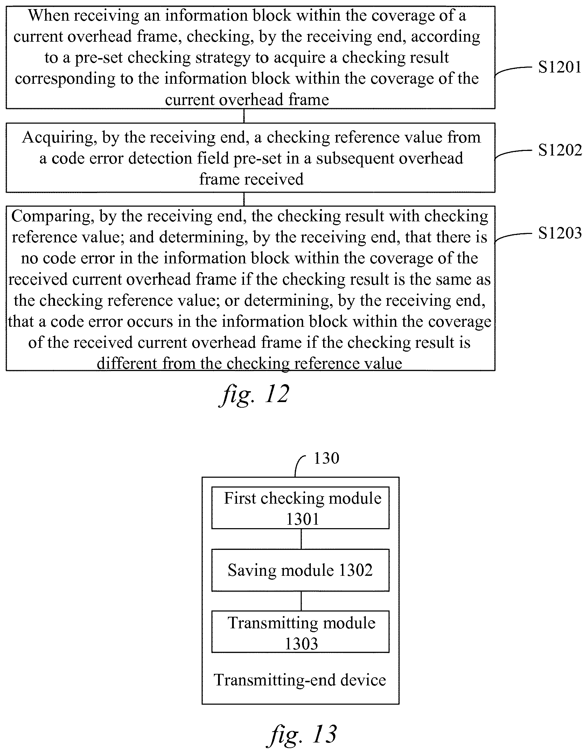

Based on the same technical concept as that of the foregoing embodiment, referring to Fig. 12, which shows a still further code error detection method provided in an embodiment of the present invention, the method is applied to a receiving end in a FlexE network structure, and the method may comprise:
S1201: when receiving an information block within the coverage of a current overhead frame, checking, by the receiving end, according to a pre-set checking strategy to acquire a checking result corresponding to the information block within the coverage of the current overhead frame;
S1202: acquiring, by the receiving end, a checking reference value from a pre-set code error detection field in the next overhead frame received; and
S1203: comparing, by the receiving end, the checking result with checking reference value; and determining, by the receiving end, that there is no code error in the information block within the coverage of the received current overhead frame if the checking result is the same as the checking reference value; or determining, by the receiving end, that a code error occurs in the information block within the coverage of the received current overhead frame if the checking result is different from the checking reference value.

As an example, for the receiving end, since the checking strategy according to which the receiving end checks is the same as the checking strategy according to which the transmitting end checks, for step S1201, when receiving an information block within the coverage of a current overhead frame, the receiving end performing checking according to a pre-set checking strategy, to acquire a checking result corresponding to the information block within the coverage of the current overhead frame, may specifically comprise:
determining, by the receiving end, a checking start end in the received information block within the coverage of the current overhead frame, and determining a checking interval within the coverage of the current overhead frame;
acquiring, by the receiving end, sub-intervals to be checked starting from the checking start end within the checking interval according to a pre-set data length; and
operating, by the receiving end, on data within the sub-intervals to be checked according to a pre-set operation strategy sequentially to acquire the checking result corresponding to the received information block.

It can be understood that, since the checking strategy according to which the receiving end checks is the same as the checking strategy according to which the transmitting end checks, the checking start end, the checking interval, the pre-set data length, and the pre-set operation strategy used by the receiving end in the process of checking are consistent with those used by the transmitting end in the process of checking, which will not be described in detail in this embodiment.

It should be noted that, since the transmitting end saves the checking reference value corresponding to the information block to be transmitted within the coverage of the current overhead frame in the next overhead frame, the receiving end checks the received information block within the coverage of the current overhead frame and then can compare the checking result corresponding to the received information block within the coverage of the current overhead frame with the checking reference value saved in the next overhead frame, and depending on whether the two are the same, determine whether a code error occurs during the data transfer process.

Based on the same technical concept as that of the foregoing embodiment, referring to Fig. 13, which shows a transmitting-end device 130 provided in an embodiment of the present invention, the transmitting-end device may comprise: a first checking module 1301, a saving module 1302, and a transmitting module 1303, wherein
the first checking module 1301 is configured to check an information block to be transmitted within the coverage of a current overhead frame according to a pre-set checking strategy to acquire a checking reference value corresponding to the information block to be transmitted;
the saving module 1302 is configured to save the checking reference value corresponding to the information block to be transmitted within the coverage of the current overhead frame to a pre-set code error detection field in the next overhead frame; and
the transmitting module 1303 is configured to transmit the checking reference value corresponding to the information block to be transmitted within the coverage of the current overhead frame along with the next overhead frame,
wherein the checking reference value corresponding to the information block to be transmitted within the coverage of the current overhead frame is used by a receiving end to detect whether a code error occurs during data transfer by the transmitting end.

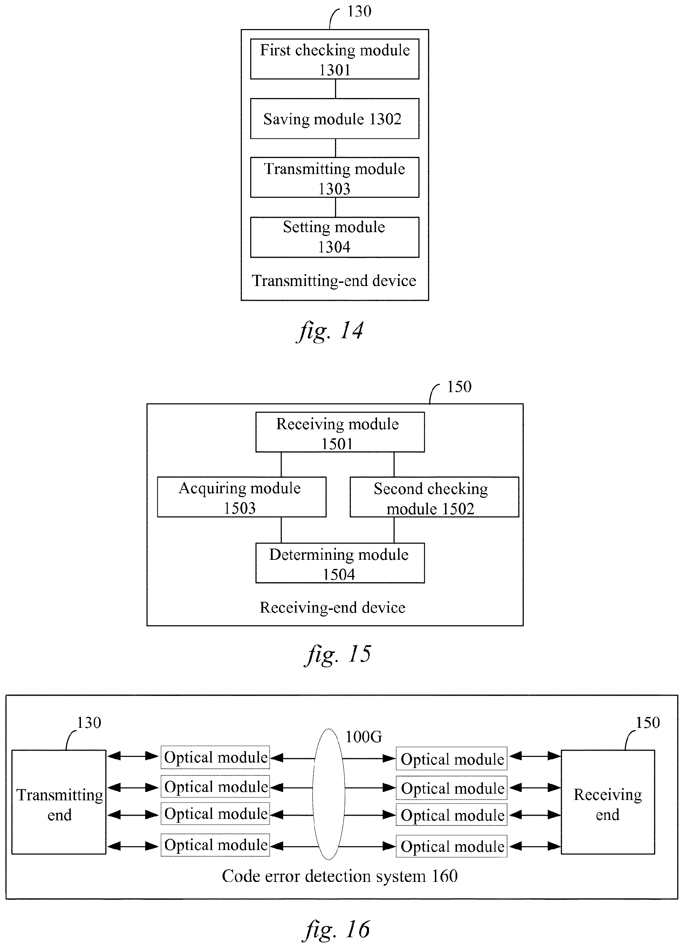

As an example, referring to Fig. 14, the transmitting-end device 130 further comprises: a setting module 1304 configured to set the code error detection field in reserved fields in the overhead frame according to a pre-set setting strategy, wherein the number of the code error detection field is at least one.

As an example, the first checking module 1301 is specifically configured to:
determine a checking start end in the information block to be transmitted, and determine a checking interval within the coverage of the current overhead frame;
acquire sub-intervals to be checked starting from the checking start end within the checking interval according to a pre-set data length; and
operate on data within the sub-intervals to be checked according to a pre-set operation strategy sequentially to acquire the checking reference value corresponding to the information block to be transmitted.

Based on the same technical concept as that of the foregoing embodiment, referring to Fig. 15, which shows a receiving-end device 150 provided in an embodiment of the present invention, the receiving-end device may comprise: a receiving module 1501, a second checking module 1502, an acquiring module 1503, and a determining module 1504, wherein
the receiving module 1501 is configured to receive an information block within the coverage of a current overhead frame;
the second checking module 1502 is configured to, when the receiving module 1501 receives the information block within the coverage of the current overhead frame, check according to a pre-set checking strategy to acquire a checking result corresponding to the information block within the coverage of the current overhead frame;
the receiving module 1501 is further configured to receive the next overhead frame;
the acquiring module 1503 is configured to acquire a checking reference value from a pre-set code error detection field in the next overhead frame received by the receiving module 1501; and
the determining module 1504 is configured to compare the checking result with the checking reference value, and determine that there is no code error in the information block within the coverage of the received current overhead frame if the checking result is the same as the checking reference value; or determine that a code error occurs in the information block within the coverage of the received current overhead frame if the checking result is different from the checking reference value.

As an example, the second checking module 1502 is specifically configured to:
determine a checking start end in the received information block within the coverage of the current overhead frame, and determine a checking interval within the coverage of the current overhead frame;
acquire sub-intervals to be checked starting from the checking start end within the checking interval according to a pre-set data length; and
operate on data within the sub-intervals to be checked according to a pre-set operation strategy sequentially to acquire the checking result corresponding to the received information block.

Based on the same technical concept as that of the foregoing embodiment, referring to Fig. 16, which shows a code error detection system 160 provided in an embodiment of the present invention, the system may comprise a transmitting end 130 and a receiving end 150 in a FlexE network structure, wherein
the transmitting end 130 is configured to: check an information block to be transmitted within the coverage of a current overhead frame according to a pre-set checking strategy to acquire a checking reference value corresponding to the information block to be transmitted;
save the checking reference value corresponding to the information block to be transmitted within the coverage of the current overhead frame to a pre-set code error detection field in the next overhead frame; and
transmit the checking reference value corresponding to the information block to be transmitted within the coverage of the current overhead frame along with the next overhead frame to the receiving end; and
the receiving end 150 is configured to: when receiving an information block within the coverage of the current overhead frame, check according to a pre-set checking strategy to acquire a checking result corresponding to the information block within the coverage of the current overhead frame;
acquire the checking reference value from the pre-set code error detection field in the next overhead frame received; and
compare the checking result with the checking reference value; and determine that there is no code error in the information block within the coverage of the received current overhead frame if the checking result is the same as the checking reference value; or determine that a code error occurs in the information block within the coverage of the received current overhead frame if the checking result is different from the checking reference value.

A skilled person in the art will understand that an embodiment of the disclosure may be provided as a method, a system, or a computer program product. Therefore, the present invention may adopt hardware embodiments, software embodiments, or embodiments with a combination of software and hardware. Moreover, the present invention may adopt the form of a computer program product that is implemented on one or more computer-usable storage mediums (including but not limited to a disk memory, an optical memory, and the like) that include computer-usable program code.

The present invention is described by referring to the flow charts and/or block diagrams of the methods, devices (systems) and computer program products according to the embodiments of the present invention. It should be understood that each flow and/or block in the flow charts and/or block diagrams and any combination of the flows and/or blocks in the flow charts and/or block diagrams may be implemented with computer program instructions. These computer program instructions may be provided to a processor of a general-purpose computer, a dedicated-purpose computer, an embedded processor or other programmable data processing devices to generate a machine, so that the instructions executed by the processor of a computer or other programmable data processing devices generate a means for implementing the functions specified in one or more flows of the flowcharts and/or one or more blocks of the block diagrams.

These computer program instructions may also be stored in a computer-readable memory which may guide a computer or other programmable data processing devices to operate in a specific manner, so that the instructions stored in the computer-readable memory generate an article of manufacture including an instruction means which can implement the functions specified in one or more flows of the flowcharts and/or one or more blocks of the block diagrams.

These computer program instructions may also be loaded in a computer or other programmable data processing devices, so that a series of operation steps are executed by the computer or other programmable devices to realize computer-implemented processing and thus the instructions executed by the computer or other programmable devices provide steps for implementing the functions specified in one or more flows of the flow charts and/or one or more blocks of the block diagrams.

On this basis, an embodiment of the present invention provides a computer-readable storage medium having stored thereon a computer program that is executed by a processor to implement the steps of the method for the transmitting end, or the steps of the method for the receiving end.

The foregoing descriptions are merely illustrative of the preferred embodiments of the invention but not intended to limit the scope of the present invention.

### Industrial applicability

In the solutions provided in the embodiments of the present invention, the checking reference value of the data to be transferred is transferred by the transmitting end to the receiving end, so that the receiving end can check the received data according to the checking reference value transferred by the transmitting end, and can perform code error detection on the physical channel in the FlexE protocol, thereby improving the reliability and application value of the FlexE protocol.

## Claims

1. A code error detection method applied to a transmitting end in a flexible Ethernet (FLexE) network structure, the method comprising:
checking, by the transmitting end, an information block to be transmitted within the coverage of a current overhead frame according to a pre-set checking strategy to acquire a checking reference value corresponding to the information block to be transmitted;
saving, by the transmitting end, the checking reference value corresponding to the information block to be transmitted within the coverage of the current overhead frame to a pre-set code error detection field in the next overhead frame; and
transmitting, by the transmitting end, the checking reference value corresponding to the information block to be transmitted within the coverage of the current overhead frame along with the next overhead frame,
wherein the checking reference value corresponding to the information block to be transmitted within the coverage of the current overhead frame is used by a receiving end to detect whether a code error occurs during data transfer by the transmitting end.

2. The method according to claim 1, wherein before checking, by the transmitting end, an information block to be transmitted within the coverage of a current overhead frame according to a pre-set checking strategy to acquire a checking reference value corresponding to the information block to be transmitted, the method further comprises:
setting, by the transmitting end, the code error detection field in reserved fields in the overhead frame according to a pre-set setting strategy, wherein the number of the code error detection field is at least one.

3. The method according to claim 1, wherein checking, by the transmitting end, an information block to be transmitted within the coverage of a current overhead frame according to a pre-set checking strategy to acquire a checking reference value corresponding to the information block to be transmitted, comprises:
determining, by the transmitting end, a checking start end in the information block to be transmitted, and determining a checking interval within the coverage of the current overhead frame;
acquiring, by the transmitting end, sub-intervals to be checked starting from the checking start end within the checking interval according to a pre-set data length; and
operating, by the transmitting end, on data within the sub-intervals to be checked according to a pre-set operation strategy sequentially to acquire the checking reference value corresponding to the information block to be transmitted.

4. A code error detection method applied to a receiving end in a FLexE network structure, the method comprising:
when receiving an information block within the coverage of a current overhead frame, checking, by the receiving end, according to a pre-set checking strategy to acquire a checking result corresponding to the information block within the coverage of the current overhead frame;
acquiring, by the receiving end, a checking reference value from a pre-set code error detection field in the next overhead frame received; and
comparing, by the receiving end, the checking result with the checking reference value; and determining, by the receiving end, that there is no code error in the information block within the coverage of the received current overhead frame if the checking result is the same as the checking reference value; or determining, by the receiving end, that a code error occurs in the information block within the coverage of the received current overhead frame if the checking result is different from the checking reference value.

5. The method according to claim 4, wherein when receiving an information block within the coverage of a current overhead frame, checking, by the receiving end, according to a pre-set checking strategy to acquire a checking result corresponding to the information block within the coverage of the current overhead frame, comprises;
determining, by the receiving end, a checking start end in the received information block within the coverage of the current overhead frame, and determining a checking interval within the coverage of the current overhead frame;
acquiring, by the receiving end, sub-intervals to be checked starting from the checking start end within the checking interval according to a pre-set data length; and
operating, by the receiving end, on data within the sub-intervals to be checked according to a pre-set operation strategy sequentially to acquire the checking result corresponding to the received information block.

6. A code error checking method applied to a transmitting end and a receiving end in a FLEXE network structure, the method comprising:
checking, by the transmitting end, an information block to be transmitted within the coverage of a current overhead frame according to a pre-set checking strategy to acquire a checking reference value corresponding to the information block to be transmitted;
saving, by the transmitting end, the checking reference value corresponding to the information block to be transmitted within the coverage of the current overhead frame to a pre-set code error detection field in the next overhead frame; and
transmitting, by the transmitting end, the checking reference value corresponding to the information block to be transmitted within the coverage of the current overhead frame along with the next overhead frame to the receiving end;
when receiving the information block within the coverage of the current overhead frame, checking, by the receiving end, according to a pre-set checking strategy to acquire a checking result corresponding to the information block within the coverage of the current overhead frame;
acquiring, by the receiving end, the checking reference value from the pre-set code error detection field in the next overhead frame received; and
comparing, by the receiving end, the checking result with the checking reference value; and determining, by the receiving end, that there is no code error in the information block within the coverage of the received current overhead frame if the checking result is the same as the checking reference value; or determining, by the receiving end, that a code error occurs in the information block within the coverage of the received current overhead frame if the checking result is different from the checking reference value.

7. A transmitting-end device, comprising: a first checking module, a saving module, and a transmitting module, wherein
the first checking module is configured to check an information block to be transmitted within the coverage of a current overhead frame according to a pre-set checking strategy to acquire a checking reference value corresponding to the information block to be transmitted;
the saving module is configured to save the checking reference value corresponding to the information block to be transmitted within the coverage of the current overhead frame to a pre-set code error detection field in the next overhead frame; and
the transmitting module is configured to transmit the checking reference value corresponding to the information block to be transmitted within the coverage of the current overhead frame along with the next overhead frame,
wherein the transmitted checking reference value corresponding to the information block to be transmitted within the coverage of the current overhead frame is used by a receiving end to detect whether a code error occurs during data transfer by the transmitting end.

8. The transmitting-end device according to claim 7, further comprising: a setting module configured to set the code error detection field in reserved fields in the overhead frame according to a pre-set setting strategy, wherein the number of the code error detection field is at least one.

9. The transmitting-end device according to claim 7, wherein the first checking module is configured to:
determine a checking start end in the information block to be transmitted, and determine a checking interval within the coverage of the current overhead frame;
acquire sub-intervals to be checked starting from the checking start end within the checking interval according to a pre-set data length; and
operate on data within the sub-intervals to be checked according to a pre-set operation strategy sequentially to acquire the checking reference value corresponding to the information block to be transmitted.

10. A receiving-end device, comprising: a receiving module, a second checking module, an acquiring module, and a determining module, wherein
the receiving module is configured to receive an information block within the coverage of a current overhead frame;
the second checking module is configured to, when the receiving module receives the information block within the coverage of the current overhead frame, check according to a pre-set checking strategy to acquire a checking result corresponding to the information block within the coverage of the current overhead frame;
the receiving module is further configured to receive the next overhead frame; the acquiring module is configured to acquire a checking reference value from a pre-set code error detection field in the next overhead frame received by the receiving module; and
the determining module is configured to compare the checking result with the checking reference value; and determine that there is no code error in the information block within the coverage of the received current overhead frame if the checking result is the same as the checking reference value; or determine that a code error occurs in the information block within the coverage of the received current overhead frame if the checking result is different from the checking reference value.

11. The receiving-end device according to claim 10, wherein the second checking module is configured to:
determine a checking start end in the received information block within the coverage of the current overhead frame, and determine a checking interval within the coverage of the current overhead frame;
acquire sub-intervals to be checked starting from the checking start end within the checking interval according to a pre-set data length; and
operate on data within the sub-intervals to be checked according to a pre-set operation strategy sequentially to acquire the checking result corresponding to the received information block.

12. A code error checking system, the system comprising a transmitting end and a receiving end in a FLexE network structure, wherein
the transmitting end is configured to: check an information block to be transmitted within the coverage of a current overhead frame according to a pre-set code error checking strategy to acquire a checking reference value corresponding to the information block to be transmitted;
save the checking reference value corresponding to the information block to be transmitted within the coverage of the current overhead frame to a pre-set code error detection field in the next overhead frame; and
transmit the checking reference value corresponding to the information block to be transmitted within the coverage of the current overhead frame along with the next overhead frame to the receiving end; and
the receiving end is configured to: when receiving an information block within the coverage of the current overhead frame, check according to a pre-set code error checking strategy to acquire a checking result corresponding to the information block within the coverage of the current overhead frame;
acquire the checking result from the pre-set code error detection field in the next overhead frame received; and
compare the checking result with the checking reference value; and determine that there is no code error in the information block within the coverage of the received current overhead frame if the checking result is the same as the checking reference value; or determine that a code error occurs in the information block within the coverage of the received current overhead frame if the checking result is different from the checking reference value.

13. A computer-readable storage medium having stored thereon a computer program that is executed by a processor to implement the steps of the method of any one of claims 1 to 3, or the steps of the method of claim 4 or 5.
